# EUROPEAN PATENT APPLICATION

(11) **EP 2 746 843 A1**
(43) Date of publication of application: **25.06.2014**
(21) Application number: 13187551.0
(22) Date of filing: 07.10.2013
(51) Int. Cl.: G02F 1/1335

(54) **Display panel and display apparatus having the same**

(30) Priority: 21.12.2012 KR 20120150762
(71) Applicant: Samsung Electronics Co., Ltd, Gyeonggi-do 443-742 (KR)
(72) Inventor: Jung, Il-yong, Gyeonggi-do (KR); Kim, Dong-hwan, Seoul (KR); Chung, Seong-eun, Seoul (KR); Kim, Tae-bae, Gyeonggi-do (KR); Lee, Dong-jun, Chungcheongnam-do (KR)
(74) Representative: Tindall, Adam

(57) **Abstract**

A display panel provided with light from a backlight unit, the display panel including: an upper substrate; a lower substrate disposed to face the upper substrate; a liquid crystal layer disposed between the upper substrate and the lower substrate; a lower polarizing layer formed on one surface of the lower substrate and polarizing-filtering the light from the backlight unit; an upper polarizing layer formed on one surface of the upper substrate and polarizing-filtering the light passing through the liquid crystal layer; and a color filter layer formed on one surface of the lower substrate and the upper substrate and filtering light so that lights of a plurality of preset colors are emitted, wherein each of the lower polarizing layer, the upper polarizing layer, and the color filter layer comprises a linear pattern.

## Description

### BACKGROUND

### 1. Field

Apparatuses and methods consistent with the exemplary embodiments relate to a display panel displaying an image on a surface thereof, and a display apparatus having the same. More particularly, the invention relates to a display panel having an improved structure for polarizing-filtering light and converting light into a desired color of light, such as a liquid crystal display panel displaying an image by light provided from a backlight unit, and a display apparatus having the same.

### 2. Description of the Related Art

A display apparatus is a device which includes a display panel displaying images to present broadcast signals or various formats of image signals or image data, and is configured as a TV, a monitor, or the like. The display panel is configured as various types, such as a liquid crystal display (LCD) panel, a plasma display panel (PDP), or the like, and is employed for a variety of display apparatuses. Here, when an LCD panel that does not generate light by itself is adopted as a display panel, a display apparatus includes a backlight unit which generates and provides light to the display panel.

A conventional LCD panel may include a polarizing film polarizing and filtering light radiated from a backlight unit and a color filter layer converting the radiated light into RGB lights. However, the polarizing film and the color filter layer of a conventional LCD panel have a high reflectance and absorption rate, thereby reducing the light use and light transmission efficiency through the panel. Particularly, the color filter layer includes RGB dye layers, and each color dye layer transmits light in a necessary wavelength range only and reflects or absorbs light in the other wavelength ranges. This way the polarizing film and the color filters are causing significant loss of light and a significant decrease in light transmission efficiency.

To minimize the light loss and the decrease in light transmission efficiency, conventional display panels may employ a dual brightness enhance film (DBEF) manufactured by crossing polymer films into a multilayer stacked on a light entering surface. However, the DBEF and the color filter layer involve a complicated manufacturing process and high production costs, contributing to an increase in prices of the display panel and a display apparatus adopting the display panel.

### SUMMARY

An aspect of one or more exemplary embodiments is to provide a display panel provided with light from a backlight unit, the display panel including: an upper substrate; a lower substrate disposed to face the upper substrate; a liquid crystal layer disposed between the upper substrate and the lower substrate; a lower polarizing layer formed on one surface of the lower substrate and polarizing-filtering the light from the backlight unit; an upper polarizing layer formed on one surface of the upper substrate and polarizing-filtering the light passing through the liquid crystal layer; and a color filter layer formed on one surface of the lower substrate and the upper substrate and filtering light so that lights of a plurality of preset colors are emitted, wherein each of the lower polarizing layer, the upper polarizing layer, and the color filter layer includes a linear pattern. In another exemplary embodiment the display panel may include a lower polarizing layer configured to polarize and filter light received from the backlight unit; an upper polarizing layer formed on one surface of the upper substrate, the upper polarizing layer being configured to polarize and filter light received from the lower polarizing layer and passing through the liquid crystal layer; and a color filter layer formed on another surface of the lower substrate or on another surface of the upper substrate. The color filter layer may include a plurality of color filters, each of the color filters transmitting corresponding light of a preset color. Each of the lower polarizing layer, the upper polarizing layer, and the color filter layer may include a linear pattern.

The linear pattern of the lower polarizing layer may conduct filtering to transmit light in a first polarizing direction of the light from the backlight unit, and the linear pattern of the upper polarizing layer may conduct filtering to transmit light in a second polarizing direction perpendicular to the first polarizing direction of the light passing through the liquid crystal layer.

An extending direction of the linear pattern of the lower polarizing layer may be perpendicular to an extending direction of the linear pattern of the upper polarizing layer, and an extending direction of the linear pattern of the color filter layer may be the same as the extending direction of the linear pattern of the lower polarizing layer when the color filter layer is formed on the lower substrate, and may be the same as the extending direction of the linear pattern of the upper polarizing layer when the color filter layer is formed on the upper substrate.

Each pixel of the liquid crystal layer may include a plurality of sub-pixels corresponding to the plurality of colors, respectively, and a pitch of the linear pattern of the color filter layer may be set to corresponding to a wavelength of each color light by each sub-pixel.

The plurality of colors may include red (R), green (G), and blue (B).

Another aspect of one or more exemplary embodiments is to provide a display apparatus including: a signal reception unit receiving an image signal; a signal processing unit processing the image signal received by the signal reception unit according to a preset image processing process; a display panel displaying an image based on the image signal processed by the signal processing unit; and a backlight unit generating and providing light to the display panel so that the image is displayed on the display panel, wherein the display panel includes: an upper substrate; a lower substrate disposed to face the upper substrate; a liquid crystal layer disposed between the upper substrate and the lower substrate; a lower polarizing layer formed on one surface of the lower substrate and polarizing-filtering the light from the backlight unit; an upper polarizing layer formed on one surface of the upper substrate and polarizing-filtering the light passing through the liquid crystal layer; and a color filter layer formed on one surface of the lower substrate and the upper substrate and filtering light so that lights of a plurality of preset colors are emitted, wherein each of the lower polarizing layer, the upper polarizing layer, and the color filter layer includes a linear pattern.

The linear pattern of the lower polarizing layer may conduct filtering to transmit light in a first polarizing direction of the light from the backlight unit, and the linear pattern of the upper polarizing layer may conduct filtering to transmit light in a second polarizing direction perpendicular to the first polarizing direction of the light passing through the liquid crystal layer.

An extending direction of the linear pattern of the lower polarizing layer may be perpendicular to an extending direction of the linear pattern of the upper polarizing layer, and an extending direction of the linear pattern of the color filter layer may be the same as the extending direction of the linear pattern of the lower polarizing layer when the color filter layer is formed on the lower substrate, and may be the same as the extending direction of the linear pattern of the upper polarizing layer when the color filter layer is formed on the upper substrate.

Each pixel of the liquid crystal layer may include a plurality of sub-pixels corresponding to the plurality of colors, respectively, and a pitch of the linear pattern of the color filter layer may be set to corresponding to a wavelength of each color light by each sub-pixel.

The plurality of colors may include red (R), green (G), and blue (B).

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is an exploded perspective view of a display apparatus according to a first exemplary embodiment.
FIG. 2 is a cross-sectional view illustrating the elements of a display panel of the display apparatus of FIG. 1 and the way the elements are stacked.
FIG. 3 is a perspective view illustrating a main part of a lower polarizing layer as the one shown in the display panel of FIG. 2.
FIG. 4 is a lateral cross-sectional view illustrating a configuration of the lower polarizing layer of FIG. 3.
FIG. 5 is a lateral cross-sectional view illustrating a configuration of an upper polarizing layer in the display panel of FIG. 2.
FIG. 6 illustrates sub-pixels by colors of each pixel in a liquid crystal layer of the display panel of FIG. 2.
FIG. 7 illustrates bars of the linear patterns of a color filter layer corresponding to the respective sub-pixels of FIG. 6.
FIG. 8 illustrates, for comparison, extending directions of linear patterns of the lower polarizing layer, the upper polarizing layer, and the color filter layer of the display panel of FIG. 2.
FIGS. 9 to 11 are lateral cross-sectional views illustrating a plurality of layered structures that the color filter layer of the display panel of FIG. 2 may employ.
FIG. 12 illustrates a polarization type of a lower polarizing layer and an upper polarizing layer according to a second exemplary embodiment.
FIG. 13 illustrates a polarization type of a lower polarizing layer and an upper polarizing layer according to a third exemplary embodiment.
FIGS. 14 to 20 illustrate a process of manufacturing a linear pattern according to a fourth exemplary embodiment.
FIG. 21 is a block diagram illustrating a configuration of a display apparatus according to a fifth exemplary embodiment.

### DETAILED DESCRIPTION OF EXEMPLARY EMBODIMENTS

Below, exemplary embodiments will be described in detail with reference to the accompanying drawings so as to be easily realized by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

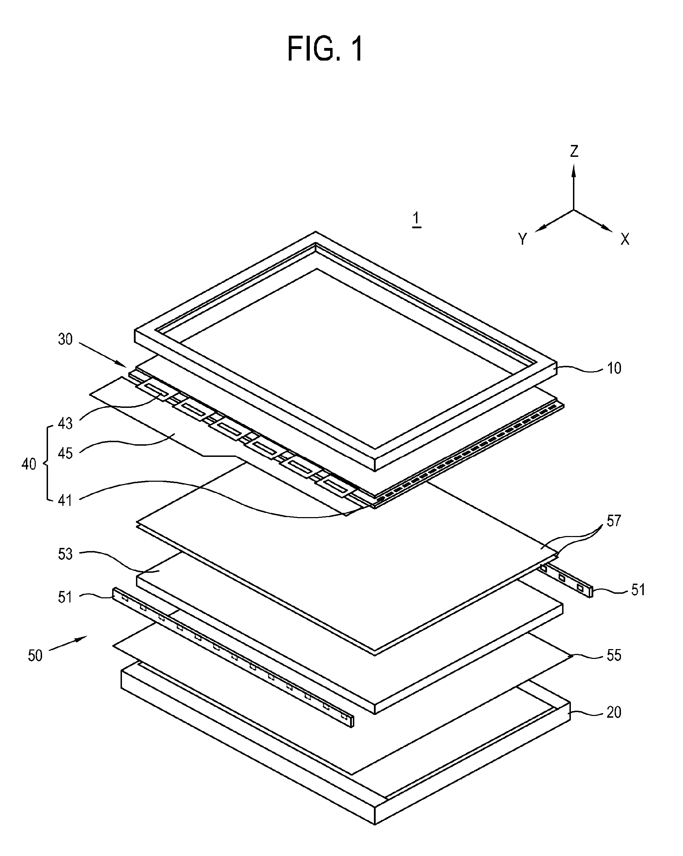

FIG. 1 is an exploded perspective view of a display apparatus 1 according to a first exemplary embodiment.

Referring to FIG. 1, the display apparatus 1 according to the present embodiment includes covers 10 and 20 forming an interior space, a display panel 30 situated in the interior space by the covers 10 and 20 and displaying images on an upper surface thereof, a panel driving unit 40 driving the display panel 30, and a backlight unit 50 situated in the interior space between the covers 10 and 20 facing a lower surface of the display panel 30 and providing light to the display panel 30.

First, directions shown in FIG. 1 are defined as follows. Basically, X, Y, and Z directions of FIG. 1 indicate width, length, and height directions of the display panel 30, respectively. The display panel 30 is disposed on an X-Y plane, and the covers 10 and 20, the display panel 30 and the backlight unit 50 are stacked in a Z-axis direction. Opposite X, Y, and Z directions are expressed as -X, -Y, and -Z directions, respectively, and the X-Y plane means a plane defined by an X-axis and a Y-axis.

The covers 10 and 20 form an outward shape of the display apparatus 1 and support the display panel 30 and the backlight unit 50 which are situated inside. Defining the Z direction as a front direction/front side and the -Z direction as a rear direction/rear side based on the display panel 30 in FIG. 1, the covers 10 and 20 include a front cover 10 supporting a front side of the display panel 30 and a rear cover 20 supporting a rear side of the backlight unit 50. The front cover 10 has an opening formed on a surface thereof parallel with the X-Y plane to expose an image display area of the display panel 30 therethrough.

The display panel 30 is configured as an LCD panel. The display panel 30 is formed of two substrates (not shown) and a liquid crystal layer (not shown) interposed therebetween and displays images on a surface thereof by adjusting an arrangement of liquid crystals in the liquid crystal layer (not shown) through application of driving signals. The display panel 30 does not emit light by itself and thus is provided with light from the backlight unit 50 to display images in the image display area.

The panel driving unit 40 applies a driving signal for driving the liquid crystal layer to the display panel 30. The panel driving unit 40 includes a gate drive integrated circuit (IC) 41, a data chip film package 43, and a printed circuit board (PCB) 45.

The gate drive IC 41 is integratedly formed on a substrate (not shown) of the display panel 30 and is connected to each gate line (not shown) on the display panel 30. The data chip film package 43 is connected to each data line (not shown) formed on the display panel 30. Here, the data chip film package 43 may include a wiring pattern, obtained by forming semiconductor chips on a base film, and a tape automated bonding (TAB) tape bonded by a TAB technique. The chip film package may include, for example, a tape carrier package (TCP) or a chip on film (COF). Meanwhile, the PCB 45 inputs a gate drive signal to the gate drive IC 41 and inputs a data drive signal to the data chip film package 43.

With this configuration, the panel driving unit 40 inputs drive signals to each gate line and each data line on the display panel 30, respectively, thereby driving the liquid crystal layer (not shown) by pixel as a unit.

The backlight unit 50 may be disposed behind the display panel 30, that is, in the -Z direction of the display panel 30, to provide light to the lower surface of the display panel 30. The backlight unit 50 includes a light source unit 51 disposed on an edge of the display panel 30, a light guide plate 53 disposed parallel with the display panel 30 to face the lower surface of the display panel 30, a reflection plate 55 disposed under the light guide plate 53 to face a lower surface of the light guide plate 53, and at least one optical sheet 57 disposed between the display panel 30 and the light guide plate 53.

In the present embodiment, an edge-type backlight unit 50 is illustrated in which the light source unit 51 is disposed on a lateral side of the light guide plate 53. The light emitting direction of the light source unit 51 and a light exiting direction of the light guide plate 53 are perpendicular to each other. However, the invention is not limited by the type and structure of the backlight unit. The backlight unit 50 may be changed or modified in various ways and may have various designs without departing from the scope of the invention. For example, a direct-type backlight unit 50 may be used in which the light source unit 51 is disposed under the light guide plate 53 and the light emitting direction of the light source unit 51 and the light exiting direction of the light guide plate 53 are parallel with each other.

The light source unit 51 generates light and emits the generated light in a direction such that a substantial part of the emitted light enters the light guide plate 53. The light source unit 51 is installed perpendicular to the surface of the display panel 30, that is, the X-Y plane, and disposed along at least one of four edges of the display panel 30 or the light guide plate 53. The light source unit 51 may include light emitting elements (not shown), such as light emitting diodes (LEDs) sequentially disposed on a module substrate (not shown) in the X direction.

The light guide plate 53, which is a plastic lens including injection molded acrylic materials, uniformly guides light incident from the light source unit 51 to the entire image display area of the display panel 30. A lower side of the light guide plate 53 that is a side in the -Z direction faces the reflection plate 55. Further, among four side walls formed between an upper side and the lower side in four directions of the light guide plate 53, side walls in the Y and -Y directions face the light source unit 51. Light radiated from the light source unit 51 enters the side walls in the Y and -Y directions.

The light guide plate 53 includes various optical patterns (not shown) formed on the lower side to diffuse and / or reflect light proceeding in the light guide plate 53 or to change a traveling direction of the light, thereby distributing light exiting from the light guide plate 53 uniformly.

The reflection plate 55 under the light guide plate 53 reflects light exiting from an inside of the light guide plate 53 to the outside, thus sending the light back toward the light guide plate 53. The reflection plate 55 reflects light not reflected by the optical patterns formed on the lower side of the light guide plate 53 back into the light guide plate 53. To this end, a surface of the reflection plate 55 in the Z direction has total reflection characteristics.

The at least one optical sheet 57 is stacked on the light guide plate 53 to adjust characteristics of light exiting from the light guide plate 53. The optical sheet 57 may include a diffusion sheet, a prism sheet, or a protection sheet, wherein two or more kinds of sheets may be stacked in combination such as to provide the desired light characteristics.

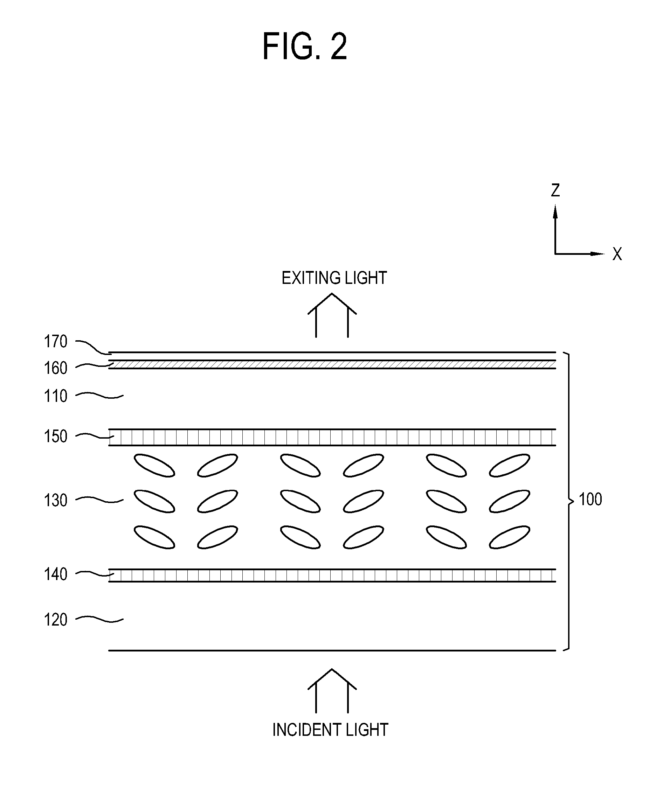

Hereinafter, a configuration of a display panel 100 according to an exemplary embodiment will be described in detail with reference to FIG. 2. FIG. 2 is a cross-sectional view illustrating the elements of the display panel 100 and the way these elements are stacked. The display panel 100 of FIG. 2 has a configuration substantially the same as the display panel 30 illustrated in FIG. 1 and thus may be applied to the display apparatus 1 of FIG. 1.

As shown in FIG. 2, light radiated in the Z direction from the backlight unit 50 (FIG. 1) enters the display panel 100 through the substrate 120, passes in the Z direction through various elements of the display panel 100 and exits the display panel in a Z direction.

In the following description, spatially relative terms, such as "upper," "above," "lower" and "under" may be used herein for ease of description to describe the relationship of one element or feature to another element(s) or feature(s) in arrangement or deposition based on the Z direction in which the light proceeds.

The display panel 100 includes an upper substrate 110, a lower substrate 120 disposed to face the upper substrate 110, a liquid crystal layer 130 disposed between the upper substrate 110 and the lower substrate 120, a lower polarizing layer 140 disposed between the liquid crystal layer 130 and the lower substrate 120, an upper polarizing layer 150 disposed between the liquid crystal layer 130 and the upper substrate 110, a color filter layer 160 formed on a light exiting surface of the upper substrate 110, and an antireflection layer 170 stacked on the color filter layer 160.

Here, in the present embodiment, the lower polarizing layer 140, the upper polarizing layer 150, and the color filter layer 160 include a linear pattern with a preset pitch interval, which will be described in detail.

Hereinafter, the elements of the display panel 100 will be described in detail.

The upper substrate 110 and the lower substrate 120 are transparent substrates disposed at a predetermined distance in the light proceeding direction such as to face each other. As for materials, the upper substrate 110 and the lower substrate 120 may be formed of a glass or plastic substrate. As a plastic substrate, the upper substrate 110 and the lower substrate 120 may include polycarbonate, polyimide (PI), polyethersulphone (PES), polyacrylate (PAR), polyethylenenaphthelate (PEN), or polyethyleneterephehalate (PET).

The upper substrate 110 and the lower substrate 120 may have different characteristics based on the drive method of the liquid crystal layer 130. For example, in a passive-matrix liquid crystal layer 130, the upper substrate 110 and the lower substrate 120 may include soda lime glass. In an active-matrix liquid crystal layer 130, the upper substrate 110 and the lower substrate 120 may include alkali free glass or borosilicate glass.

The liquid crystal layer 130 is disposed between the upper substrate 110 and the lower substrate 120 and adjusts light transmittance with a change in arrangement of the liquid crystals based on an applied driving signal. A liquid generally includes molecules with irregular orientation and arrangement. Liquid crystals are matter in a state having an order and a regularity, to a certain extent, similar to the liquid phase. For example, there is a solid which becomes in a liquid phase exhibiting anisotropic properties such as birefringence when heated and melted. Liquid crystals have optical properties such as birefringence or color change. Liquid crystals are named as such because the liquid crystals have properties of both the liquid phase and the solid crystal phase. For example, the liquid crystals may be arranged in an order and with a regularity similar to the order and regularity of a solid crystal and, at the same time, the liquid crystals may have properties of a liquid-like phase. When voltage is applied to the liquid crystals, an arrangement of the molecules is changed and optical properties are also changed accordingly.

The liquid crystals in the liquid crystal layer 130 may be classified into nematic, cholesteric, smectice, and ferroelectric liquid crystals based on an arrangement of the molecules.

The lower polarizing layer 140 is formed on a light exiting surface of the lower substrate 120. The lower polarizing layer 140 transmits only a preset first polarizing-direction component of radiated light and reflects other component than the first polarizing-direction component. The lower polarizing layer may be configured such as not to absorb a significant amount of incident light. This way the light loss may be minimized and the light use efficiency may be improved.

The upper polarizing layer 150 may be formed on a light entering surface of the upper substrate 110. The upper polarizing layer 150 transmits only a preset second polarizing-direction component of the light transmitted via the lower substrate 120, the lower polarizing layer 140, and the liquid crystal layer 130. The upper polarizing layer reflects the other polarization components which are different from the second polarizing-direction component. The upper polarizing layer may be configured such as not to absorb a significant amount of incident light. This way the light loss may be minimized and the light use efficiency may be improved.

Here, a second polarizing direction is different from a first polarizing direction, particularly the second polarizing direction is perpendicular to the first polarizing direction. The polarization directions are configured in this way because a polarizing direction of the radiated light may be rotated 90 degrees by the liquid crystal layer 130, depending on a voltage applied to the liquid crystal layer, when the radiated light passes through the liquid crystal layer 130. If the upper polarizing layer 150 transmits the first polarizing-direction component in the same way as the lower polarizing layer 140, the radiated light in the first polarizing direction via the lower polarizing layer 140 is rendered in the second polarizing direction when passing through the liquid crystal layer 130, and thus does not pass through the upper polarizing layer 150. In this regard, a polarizing direction of light transmitted by the upper polarizing layer 150 may need to be perpendicular to that of light transmitted by the lower polarizing layer 140.

The upper polarizing layer 150 and the lower polarizing layer 140 each include a linear pattern (not shown) of bars extending in a predetermined direction on the surfaces of the upper substrate 110 and the lower substrate 120. In the linear pattern, the bars extend in a direction corresponding to each polarizing direction. The configurations of the upper polarizing layer 150 and the lower polarizing layer 140 will be described in detail.

The color filter layer 160 is formed on a surface of the lower substrate 120 or the upper substrate 110, where neither the lower polarizing layer 140 nor the upper polarizing layer 150 is formed. In the present embodiment, the color filter layer is formed on the light exiting surface of the upper substrate 110.

The color filter layer 160 converts radiated light entering the display panel 100 into light in a preset color, for example, RGB colors, and emits the converted light in the preset color. A pixel of the liquid crystal layer 130 includes sub-pixels corresponding to the RGB colors, respectively, and the color filter layer 160 conducts filtering by color with respect to each sub-pixel by color. Each sub-pixel may include a section of the color filter layer, and the section may form a color filter of the sub-pixel. The color filter of the sub-pixel transmits a preset color. For example, a first sub-pixel may include a red filter transmitting a wavelength range corresponding to red light, a second sub-pixel may include a green filter transmitting a wavelength range corresponding to green light, and a third sub-pixel may include a blue filter transmitting a wavelength range corresponding to blue light. Thus, radiated light passing through the sub-pixels is converted into light in RGB colors by the color filter layer 160.

The color filter layer 160 has a structure of a linear pattern (not shown) similar to those of the upper polarizing layer 150 and the lower polarizing layer 140, instead of a conventional color filtering method using a dye. However, the linear pattern of the color filter layer 160 has a distinguishing structure from those of the upper polarizing layer 150 and the lower polarizing layer 140 so as to conduct color filtering, which will be described in detail.

The antireflection layer 170 is disposed as a top layer of the display panel 100. The antireflection layer 170 irregularly reflects, absorbs, or extinguishes light from an external environment reflected on the surface, thereby reducing reflection of external light on the surface. The antireflection layer 170 is provided as an antiglare film or an antireflection film. Alternatively, the antireflection layer 170 may include an embossed pattern as a nano-scale structure of dozens to hundreds of nanometers formed on the color filter layer 160.

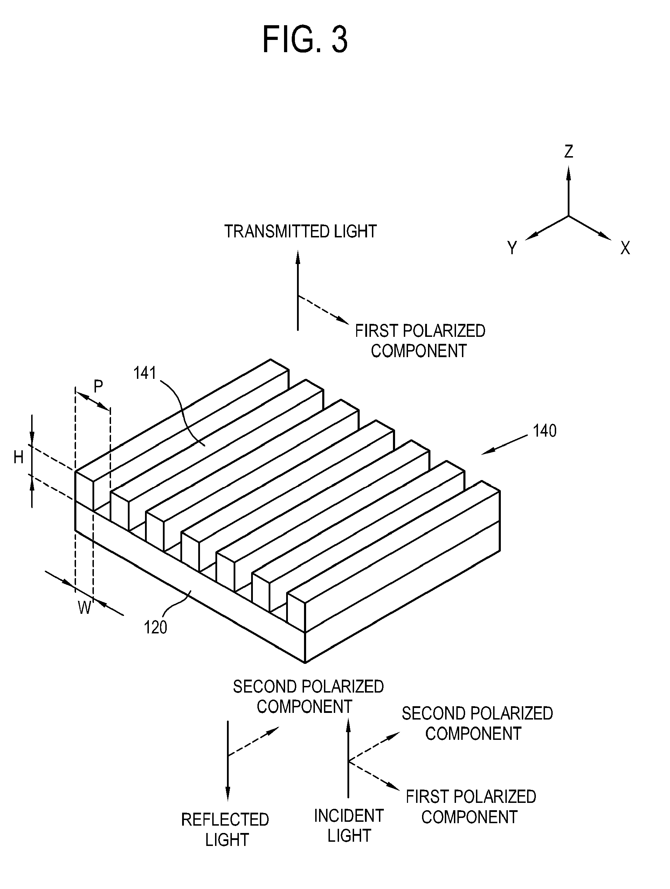

Hereinafter, a structure of the lower polarizing layer 140 will be described with reference to FIG. 3.

FIG. 3 is a perspective view illustrating a main part of the lower polarizing layer 140.

As shown in FIG. 3, the lower polarizing layer 140 includes a linear pattern of bars 141 extending in a particular direction disposed on the lower substrate 120. The bars 141 have a preset height H, width W, and pitch P and are arranged regularly.

When the pitch P of the bars 141 is adjusted to 1/2 of a wavelength of light, only transmitted light and reflected light are formed without diffracted waves. A slit is formed between two adjacent bars 141, and while incident light is passing through the slit, a first polarized component in the first polarizing direction perpendicular to the extending direction of the bars 141 passes through the lower polarizing layer 140. On the contrary, a second polarized component in the second polarizing direction parallel with the extending direction of the bars 141 is reflected again. That is, due to this structure of the linear pattern of the bars 141, light passing through the lower polarizing layer 140 is polarized-filtered in the first polarizing direction.

The reflected light, which does not pass through the lower polarizing layer 140, is reflected by the reflection plate 55 (FIG. 1) back to the display panel 100 along with light generated in the light source unit 51 (FIG. 1). That means that the light which does not pass but is filtered by the lower polarizing layer 140 may be reused, thereby improving overall efficiency of light passing through the display panel 100 without use of a conventional DBEF film.

The color filter layer may be configured such as not to absorb a significant amount of incident light. This way the light loss may be minimized and the light use efficiency may be improved.

The lower polarizing layer 140 is formed by depositing a metal layer on the lower substrate 120 and patterning the linear pattern 141 by nano-imprint lithography (NIL). By the lower polarizing layer 140, polarized light of incident light is reflected when parallel with the pattern, but is transmitted when perpendicular to the pattern.

To improve polarizing-filtering properties of the lower polarizing layer 140, an aspect ratio, i.e., a ratio of the width W of the linear pattern 141 to the height H thereof, may be 1:3 or higher. Specifically, when the pitch P is 100 to 150 nm, the width W is 50 to 75 nm, and the height H is 150 nm, proper polarizing-filtering properties may be obtained.

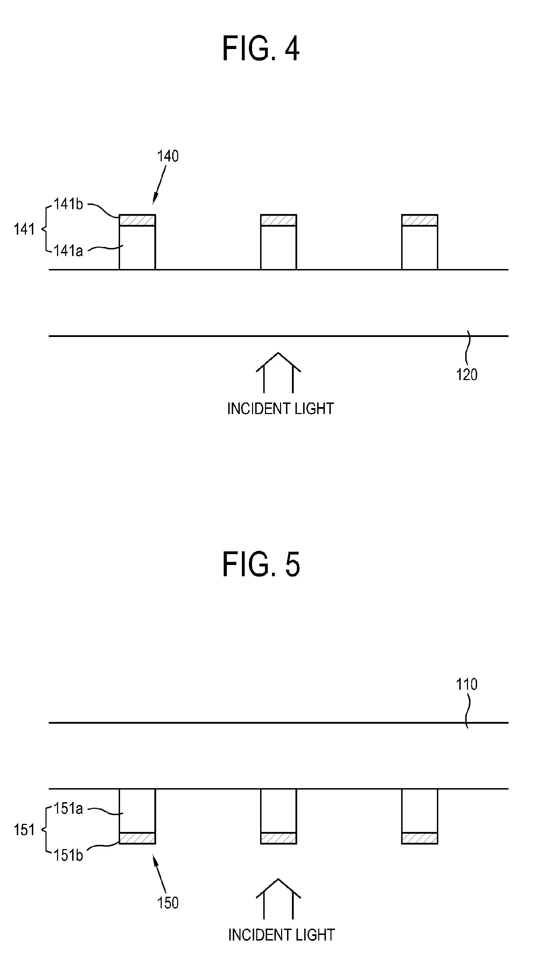

Meanwhile, the linear pattern 141 of the lower polarizing layer 140 extends along the X-Y plane. When the extending direction of the linear pattern 141 is parallel with the Y direction, an extending direction of a linear pattern 151 (FIG. 5) of the upper polarizing layer 150 is parallel with the X direction perpendicular to the Y direction. As such, the linear grid 141 of the lower polarizing layer 140 extends in a perpendicular direction to the linear pattern 151 of the upper polarizing layer 150. Accordingly, the first polarizing direction is perpendicular to the second polarizing direction.

FIG. 4 is a lateral cross-sectional view illustrating a configuration of the lower polarizing layer 140.

As shown in FIG. 4, the linear pattern 141 of the lower polarizing layer 140 includes a metal layer 141 a on the lower substrate 120 and a dielectric layer 141b formed on the metal layer 141a in a proceeding direction of light.

The lower polarizing layer 140 may conduct polarizing-filtering of light only with the structure of the aforementioned linear pattern 141. However, to enhance efficiency in polarizing-filtering of light, the lower polarizing layer 140 includes the metal layer 141a including materials with good reflectance, such as Al, Cu, or Ag. The metal layers 141a and 151a may include alloy materials with reinforced rigidity, such as MoW, or a conductive polymer.

Improvement in polarizing-filtering properties by the metal layers 141a is achieved by plasmon resonance that is the collective oscillation of free electrons on a surface of a nanoscale metal, and detailed description thereof is omitted here.

The dielectric layer 141b protects the metal layer 141a and contributes to generation of surface plasmon waves by plasmon resonance along with the metal layer 141a, thereby enhancing polarizing-filtering properties. The dielectric layer 141b includes silicon oxides.

The upper polarizing layer 150 is configured in the same manner as the lower polarizing layer 140. The upper polarizing layer 150 has the liner pattern formed on the light entering surface of the upper substrate 110 in a similar shape to that of the lower polarizing layer 140 and transmits light in a particular polarizing direction only according to the same principle as that of the lower polarizing layer 140.

FIG. 5 is a lateral cross-sectional view illustrating a configuration of the upper polarizing layer 150.

As shown in FIG. 5, the upper polarizing layer 150 includes the linear pattern 151 formed on the light entering surface of the upper substrate 110 to face the lower polarizing layer 140. Since the extending direction of the linear pattern 151 is perpendicular to the extending direction of the linear pattern 141 of the lower polarizing layer 140, a polarizing direction of light transmitted by the upper polarizing layer 150 is perpendicular to a polarizing direction of light transmitted by the lower polarizing layer 140.

The upper polarizing layer 150 includes a metal layer 151a formed on the lower surface of the upper substrate 110 and a dielectric layer 151b formed under the metal layer 151a. The upper polarizing layer 150 transmits light in a particular polarizing direction in the same manner as the lower polarizing layer 140, and thus description thereof is omitted.

Hereinafter, a configuration of the color filter layer 160 will be described in detail.

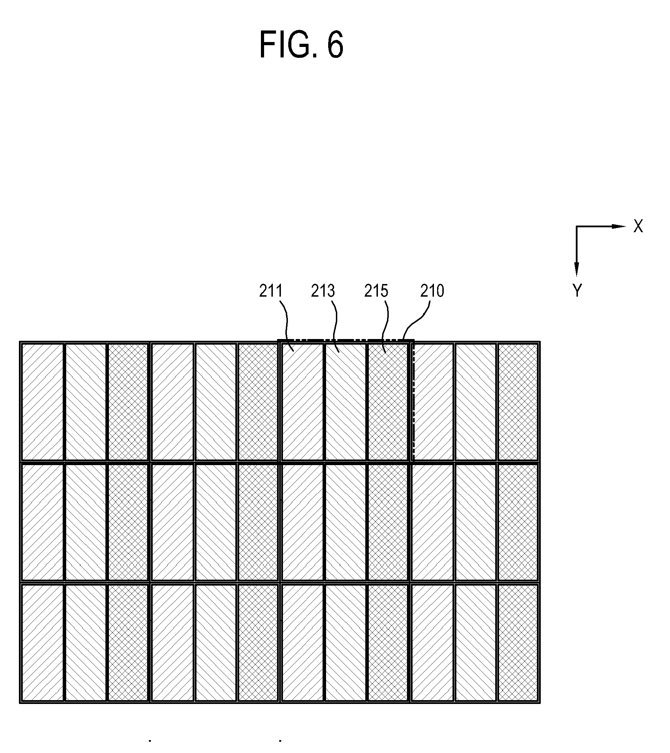

FIG. 6 illustrates sub-pixels by colors 211, 213, and 215 of each pixel 210 in the liquid crystal layer 130.

As shown in FIG. 6, one pixel 210 includes three sub-pixels 211, 213, and 215 respectively corresponding to three RGB colors. That is, the pixel 210 includes a red sub-pixel 211 corresponding to a red light emitting region, a green sub-pixel 213 corresponding to a green light emitting region, and a blue sub-pixel 215 corresponding to a blue light emitting region.

The color filter layer 160 has a structure of a linear pattern similar to those of the lower polarizing layer 140 and the upper polarizing layer 150. However, the linear patterns of the lower polarizing layer 140 and the upper polarizing layer 150 have a uniform pitch, while the linear pattern of the color filter layer 160 have different pitches corresponding to the respective sub-pixels 211, 213, and 215.

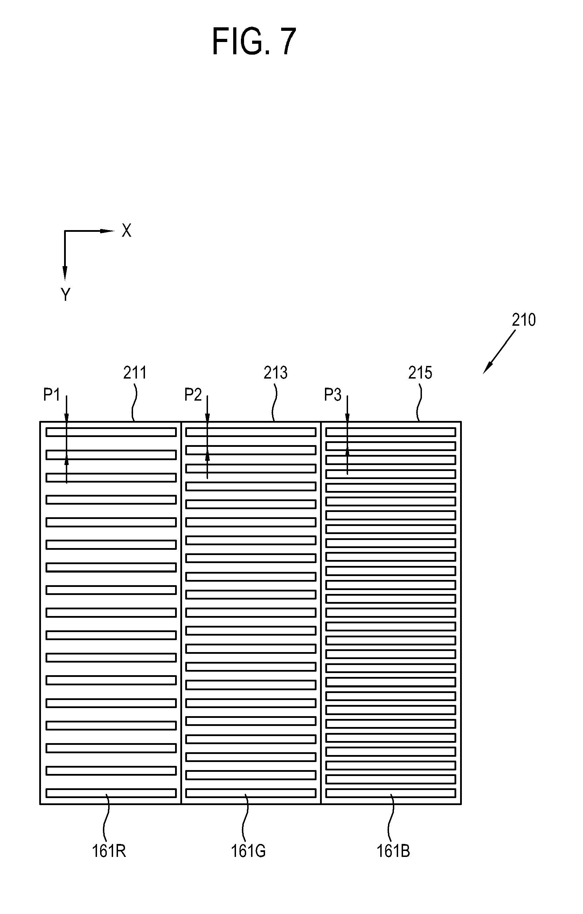

FIG. 7 illustrates bars 161R, 161G, and 161B of the linear pattern of the color filter layer 160 corresponding to the respective sub-pixels 211, 213, and 215 shown in FIG. 6.

As shown in FIG. 7, the color filter layer 160 includes red bars 161R formed in a region of the red sub-pixel 211, green bars 161G formed in a region of the green sub-pixel 213, and blue bars 161B formed in a region of the blue sub-pixel 315.

A pitch P1, P2, and P3 between the bars 161R, 161G, and 161B by each color is set to have an interval corresponding to each color. For example, a pitch P1 between the red bars 161R is smaller than 1/2 of a wavelength of red light, a pitch P2 between the green bars 161G is smaller than 1/2 of a wavelength of green light, and a pitch P3 between the blue bars 161B is smaller than 1/2 of a wavelength of blue light. As such, the pitches of the bars 161R, 161G, and 161B by the sub-pixels 211, 213, and 215 are set to different values to adjust a wavelength of incident light, thereby emitting light in different colors by the sub-pixels 211, 213, and 215.

The pitch P1 between the red bars 161R is about 330 to 390 nm, which is smaller than 1/2 of the wavelength of red light, and incident light is broken down into red light with a first polarized component while passing the red bars 161R. The filter layer 161R may select primarily red light polarized in a first direction to pass through the filter. The pitch P2 between the green bars 161G is about 250 to 290 nm, and the pitch P3 between the blue bars 161B is about 220 to 240 nm. That is, the pitches P1, P2, P3 of the bars 161R, 161G, and 161B decrease in order of R, G, and B. Such values are provided for illustrative purposes only, without limiting the present embodiment.

Here, an extending direction of the linear pattern of the color filter layer 160 is determined based on which of the lower substrate 120 and the upper substrate 110 the color filter layer 160 is formed on.

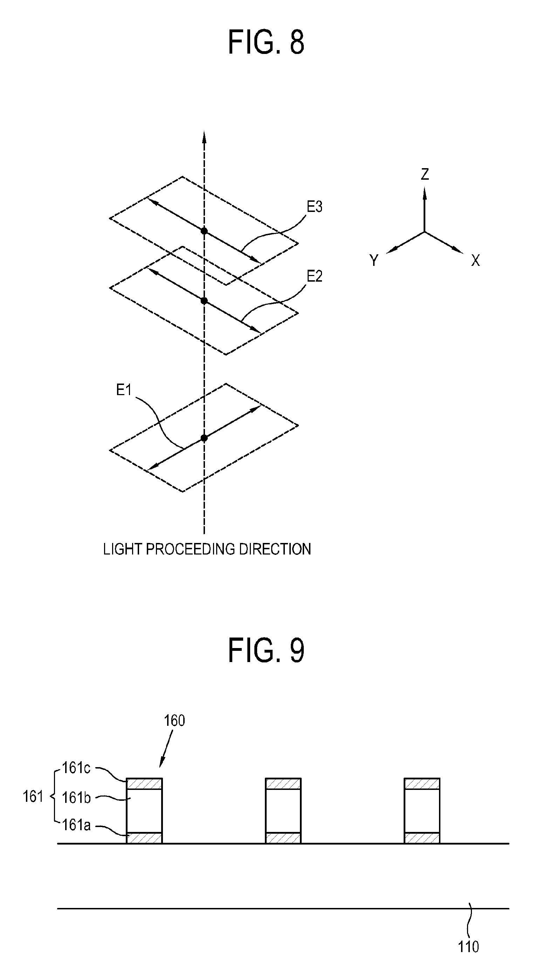

FIG. 8 illustrates the extending directions of the linear patterns of the lower polarizing layer 140, the upper polarizing layer 150, and the color filter layer 160 for comparison.

As shown in FIG. 8, when light radiated from the backlight unit 50 proceeds in the Z direction, the linear patterns of the lower polarizing layer 140, the upper polarizing layer 150, and the color filter layer 160 extend parallel with the X-Y plane.

When the lower polarizing layer 140 is formed on one surface of the lower substrate 120 and the upper polarizing layer 150 is formed on one surface of the upper substrate 110, the color filter layer 160 is formed on the other surface of the lower substrate 120 or the upper substrate 110 where neither the lower polarizing layer 140 nor the upper polarizing layer 150 is formed.

For example, the upper polarizing layer 150 may be formed on the light exiting surface of the upper substrate 110 and the color filter layer 160 may be formed on the light entering surface of the upper substrate 110. Also, the lower polarizing layer 140 may be formed on the light entering surface of the lower substrate 120 and the color filter layer 160 may be formed on the light exiting surface of the lower substrate 120. Alternatively, the lower polarizing layer 140 may be formed on the light exiting surface of the lower substrate 120 and the color filter layer 160 may be formed on the light entering surface of the lower substrate 120.

In the present embodiment, the upper polarizing layer 150 is formed on the light entering surface of the upper substrate 110 and the color filter layer 160 is formed on the light exiting surface of the upper substrate 110.

The extending direction of the linear pattern of the color filter layer 160 is the same as that of the lower polarizing layer 140 when the color filter layer 160 is formed on the lower substrate 120. The extending direction of the linear pattern of the color filter layer 160 is the same as that of the upper polarizing layer 150 when the color filter layer 160 is formed on the upper substrate 110.

Referring to FIG. 8, the extending direction E1 of the linear pattern of the lower polarizing layer 140 is parallel with the Y direction. In this case, the extending direction E2 of the linear pattern of the upper polarizing layer 150 is parallel with the X direction perpendicular to the Y direction. Further, as the color filter layer 160 is formed on the upper substrate 110, the extending direction E3 of the linear pattern of the color filter layer 160 is parallel with the X direction as well as the extending direction of the upper polarizing layer 150.

The extending direction E3 of the linear pattern of the color filter layer 160 is the same as that of the lower polarizing layer 140 or that of the upper polarizing layer 150. The color filter layer 160 may perform polarizing-filtering of light because the color filter layer 160 has a similar linear pattern structure to the patterns of the lower polarizing layer 140 and the upper polarizing layer 150. If the extending direction E3 of the linear pattern of the color filter layer 160, formed on the upper substrate 110, is not the same with that of the upper polarizing layer 150, the efficiency in polarizing-filtering of light exiting from the display panel 100 may be reduced.

Thus, the extending direction E3 of the linear pattern of the color filter layer 160 is the same as the extending direction E1 of the linear pattern of the lower polarizing layer 140 when the color filter layer 160 is formed on the lower substrate 120. Alternatively, the extending direction E3 of the linear pattern of the color filter layer 160 is the same as the extending direction E2 of the linear pattern of the upper polarizing layer 150 when the color filter layer 160 is formed on the upper substrate 110.

FIGS. 9 to 11 are lateral cross-sectional view illustrating a layered structure of the color filter layer 160.

As shown in FIG 9, the color filter layer 160 includes a linear pattern 161 formed upright on the light exiting surface of the upper substrate 110. The linear pattern 161 includes a first metal layer 161a, an insulating layer 161b, and a second metal layer 161c sequentially stacked on the upper substrate 110.

The first metal layer 161a and the second metal layer 161c are formed of metal, for example, Al and Ag, to a thickness of about 100 nm or less in a similar manner to the lower polarizing layer 140 and the upper polarizing layer 150. Although not shown in FIG. 9, a dielectric coating of MgF2 may be formed between the first metal layer 161a and the upper substrate 110. The insulating layer 161b is formed of a dielectric, for example, ZnSe or TiO2 (titanium dioxide), to a thickness of 150 nm or less.

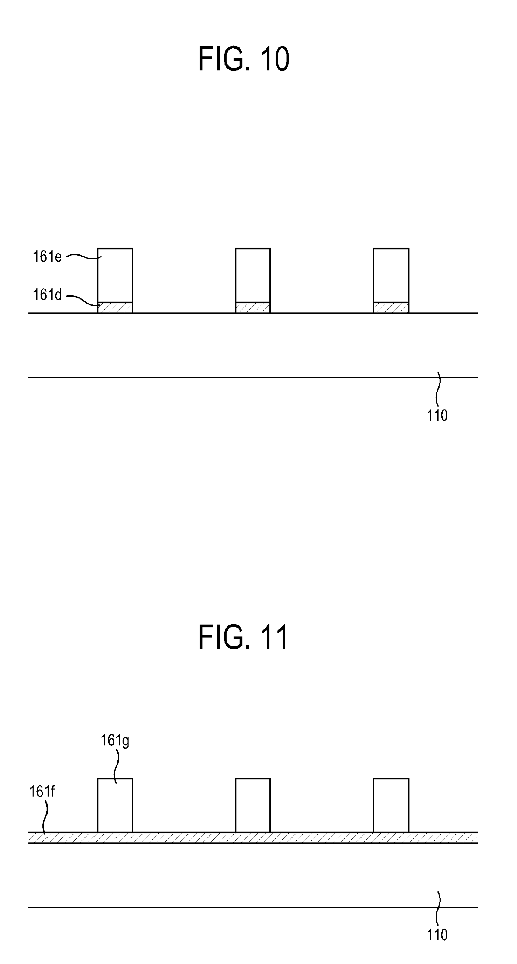

Alternatively, as shown in FIG. 10, the color filter layer 160 may include an insulating layer 161d and a metal layer 161e sequentially stacked on the upper substrate 110. The metal layer 161e is formed of metal, for example, Al and Ag, to a thickness of 100 nm or less, while the insulating layer 161d is formed of SiNx to a thickness of 100 nm or less.

Further, as shown in FIG. 11, the color filter layer 160 may be formed by applying an insulating layer 161f to the entire upper substrate 110 and forming a pattern of a metal layer 161g thereon.

As such, the color filter layer 160 may be configured in various forms.

Meanwhile, the foregoing embodiment illustrates that the lower polarizing layer 140 or the upper polarizing layer 150 transmits the same polarized component of light through the entire surface thereof. However, the lower polarizing layer 140 or the upper polarizing layer 150 may be configured to transmit different polarized components depending on regions on the surface.

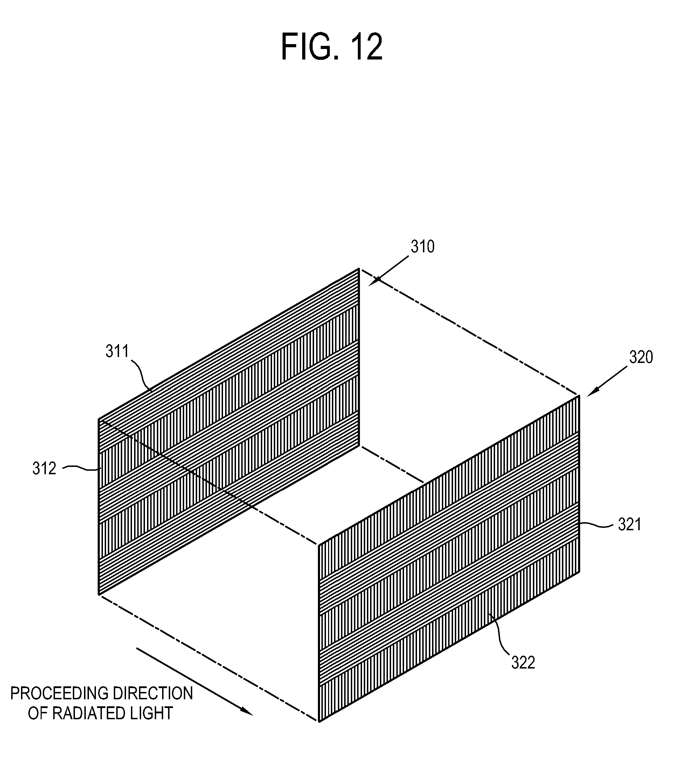

FIG. 12 illustrates a polarization type of a lower polarizing layer 310 and an upper polarizing layer 320.

As shown in FIG. 12, the lower polarizing layer 310 and the upper polarizing layer 320 are disposed to face each other. Straight lines in the lower polarizing layer 310 and the upper polarizing layer 320 indicate extending directions of linear patterns, and polarized components of transmitted light is determined based on directions of the straight lines. For example, transverse lines transmit a first polarized component of light, while vertical lines transmit a second polarized component perpendicular to the first polarized component.

The lower polarizing layer 310 is divided into a plurality of rows, which include a first lower polarizing area 311 transmitting the first polarized component and a second lower polarizing area 312 transmitting the second polarized component. In the entire area of the lower polarizing layer 310, first lower polarizing areas 311 and second lower polarizing areas 312 are alternately disposed in odd-numbered and even-numbered lines, respectively.

Likewise, the upper polarizing layer 320 is divided into a plurality of rows, which include a first upper polarizing area 321 transmitting the first polarized component and a second upper polarizing area 322 transmitting the second polarized component. In the entire area of the upper polarizing layer 320, first upper polarizing areas 321 and second upper polarizing areas 322 are alternately disposed in even-numbered and odd-numbered rows, respectively.

That is, the first lower polarizing areas 311 are disposed to face the second upper polarizing areas 321, and the second lower polarizing areas 312 are disposed to face the first upper polarizing areas 322.

The color filter layer may have a row structure similar to the upper polarizing layer or the lower polarizing layer. The color filter layer may be divided into a plurality of rows having substantially the same shape as the rows of the upper and lower polarizing layers and being parallel with the rows of the upper and lower polarizing layers. To each pair of rows on the upper and lower polarizing layers facing each other and covering a same pixel area (e.g. row 311 and row 321) a corresponding row of the color filter layer is disposed to face the two polarizing layer rows and to cover the same pixel area. The even numbered color filter rows may have a linear pattern in a first direction and the odd numbered rows may have a linear pattern in a second direction perpendicular on the first direction.

For each row, the linear pattern of the color filter may be parallel with a linear pattern of either the corresponding row on the upper polarizing layer or the corresponding row on the lower polarizing layer. For example, if the display panel has a layer stacking configuration as the one in Fig. 2 (i.e. the color filter layer 170 is disposed on the upper surface of the substrate 110, the upper polarizing layer 150 is disposed on the lower surface of the substrate 110, and the lower polarizing layer is disposed on the lower substrate 120) then the linear pattern of the color filter row may be parallel with the linear pattern of the corresponding upper polarizing layer.

When displaying three-dimensional(3D) images, for example, left-eye images may be applied to a region corresponding to the even-numbered rows and right-eye images may be applied to a region corresponding to the even-numbered rows. If a pair of polarized glasses is configured to transmit the second polarized component with respect to a left eye of a user and transmit the first polarized component to a right eye of the user, the user wearing the polarized glasses perceives the left-eye images with the left eye and perceives the right-eye images with the right eye. With this structure, when the left-eye images and the right-eye images are displayed at the same time, the user may perceive 3D images.

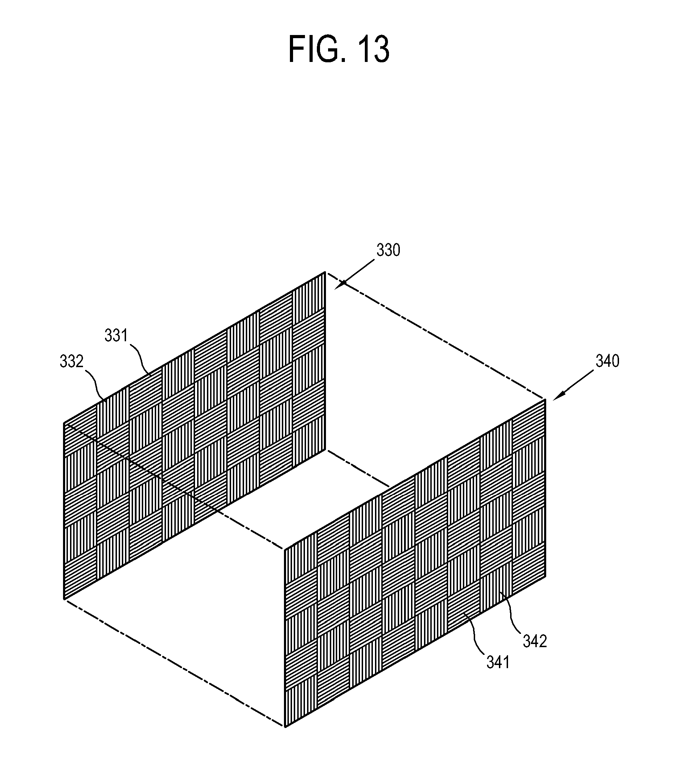

FIG. 13 illustrates a polarization type of a lower polarizing layer 330 and an upper polarizing layer 340 which has a different structure from that of FIG. 12.

As shown in FIG. 13, the lower polarizing layer 330 and the upper polarizing layer 340 are disposed to face each other. Straight lines in the lower polarizing layer 330 and the upper polarizing layer 340 indicate extending directions of linear patterns, and polarized components of transmitted light is determined based on directions of the straight lines. For example, transverse lines transmit a first polarized component of light, while vertical lines transmit a second polarized component perpendicular to the first polarized component.

The lower polarizing layer 330 is divided into a plurality of cells 331 and 332 arranged in a matrix form, such as a chessboard. The cell 331 and 332 include a first lower polarizing area 331 transmitting the first polarized component and a second lower polarizing area 332 transmitting the second polarized component. First lower polarizing areas 331 and second lower polarizing areas 332 are alternately disposed.

The upper polarizing layer 340 has a similar structure to that of the lower polarizing layer 330, in which first upper polarizing areas 341 transmitting the first polarized component and second upper polarizing areas 342 transmitting the second polarized component are alternately disposed.

Here, the first lower polarizing areas 331 are disposed to face the second upper polarizing areas 342, and the second lower polarizing areas 332 are disposed to face the first upper polarizing areas 341.

The color filter layer may have a matrix structure similar to the upper polarizing layer or the lower polarizing layer. The color filter layer may be divided into a plurality of cells having substantially the same shape as the cells of the upper and lower polarizing layers and being parallel with the cells of the upper and lower polarizing layers. To each pair of cells on the upper and lower polarizing layers facing each other and covering a same pixel area (e.g. cell 331 and cell 342) a corresponding cell of the color filter layer is disposed to face the two polarizing layer cells and to cover the same pixel area. Adjacent cells of the color filter layer matrix may have linear patterns which are perpendicular on each other. For each cell, the linear pattern of the color filter may be parallel with a linear pattern of either the corresponding cell on the upper polarizing layer or the corresponding cell on the lower polarizing layer.

For each cell, the linear pattern of the color filter may be parallel with a linear pattern of either the corresponding cell on the upper polarizing layer or the corresponding cell on the lower polarizing layer. For example, if the display panel has a layer stacking configuration as the one in Fig. 2 then the linear pattern of the color filter cell may be parallel with the linear pattern of the corresponding upper polarizing layer cell.

When displaying 3D images, different images are displayed in neighboring cells, i.e., left-eye images and right-eye images are alternately displayed like white and black alternating colors on a chessboard. Accordingly, a user wearing a pair of polarized glasses may perceive 3D images.

In this case, although images of a lower resolution than that of the display panel 100 are actually displayed, the left-eye images and the right-eye images are alternated in a grid, and thus a resolution decrease perceived by the user is relatively small as compared with the one in FIG. 12.

The display panel 100 with the aforementioned structure is effective for a display apparatus displaying 3D images, particularly a display apparatus for the user to view 3D images with passive polarized glasses.

Meanwhile, the linear patterns illustrated in the foregoing embodiment may be manufactured by a manufacture process as follows.

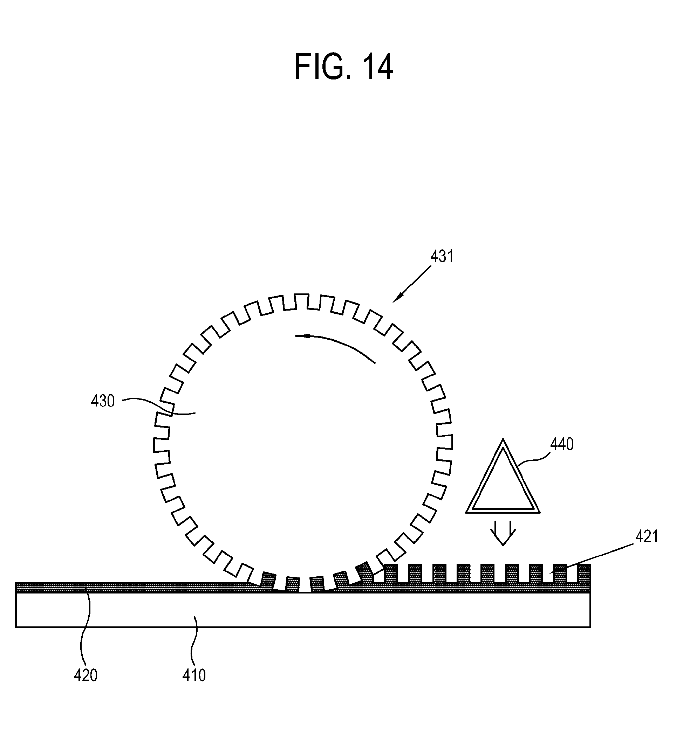

FIGS. 14 to 20 illustrate a process of manufacturing a linear pattern.

As shown in FIG. 14, a UV-curable resin 420 is applied to a flat glass, such as crystal, or a plate 410 to a predetermined thickness. A metal cylinder 430 with a linear pattern shape 431 patterned on a circumference thereof is rolled on the applied resin 420 in a certain direction, thereby forming a resin coating 420 having a linear pattern shape 421 in a proceeding direction of the metal cylinder 430. Then, the linear pattern shape 421 is cured by UV irradiation.

Accordingly, a master frame 421 of the resin 420 is prepared.

Various methods may be used to form the linear pattern shape 431 on the circumference of the metal cylinder 430, for example, plasma etching.

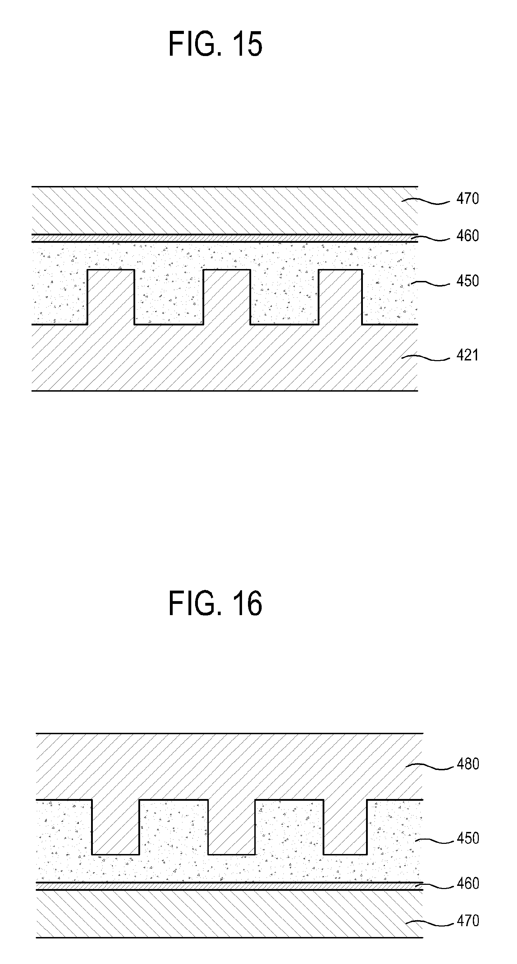

As shown in FIG. 15, the prepared master frame 421 is coated with a polyvinyl alcohol (PVA) layer 450. PVA is prepared by hydrolysis of polyvinyl acetate to remove acetate groups and is water-soluble due to hydroxyl groups. That is, PVA is removable by washing with water.

Subsequently, an adhesive 460 is applied to the PVA layer 450 and a carrier 470 is deposited thereon. Here, the carrier 470 includes a flat plate of any material which is not limited to a particular kind.

When the PVA layer 450 is bonded to the carrier 470 by the adhesive 460, the PVA layer 450 is separated from the master frame 421, thereby preparing a PVA frame 450.

As shown in FIG. 16, the separated PVA layer 450 is placed to face upwards with the carrier 470 facing downwards. Then, a photo-resist layer 480 is applied to the PVA layer 450.

Accordingly, a second frame for forming a linear pattern is prepared.

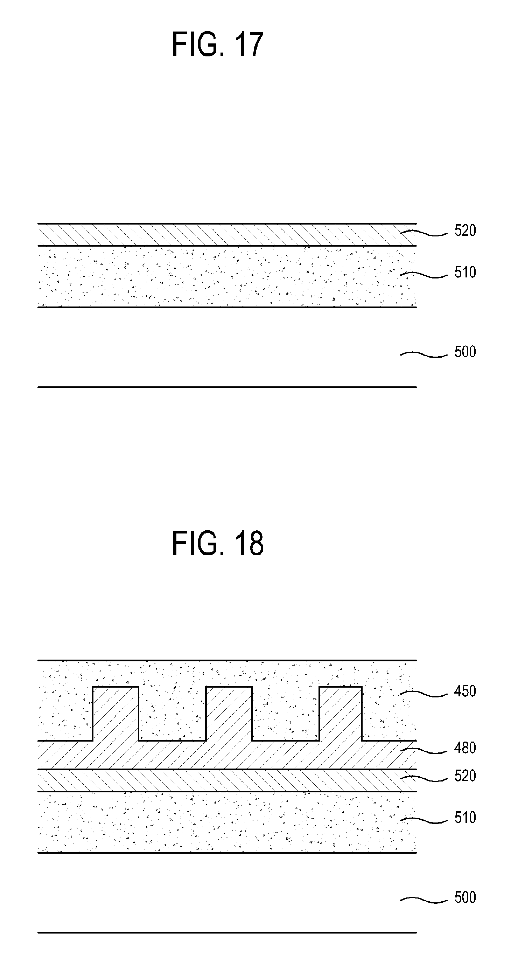

As shown in FIG. 17, pattern materials, for example, a metal layer 510 and a dielectric layer 520, are sequentially applied to glass 500. Here, the glass 500 is the upper substrate 110 or the lower substrate 120 of the display panel 100. In this state, the second frame shown in FIG. 16 is stacked on the dielectric layer 520.

In the present embodiment, the pattern materials include both the metal layer 510 and the dielectric layer 520. Alternatively, the pattern materials may include either the metal layer 510 or the dielectric layer 520.

As shown in FIG. 18, the prepared second frame (see FIG. 16) is stacked on the dielectric layer 520. Here, the photo-resist layer 480 is disposed directly on the dielectric layer 520. That is, the second frame shown in FIG. 16 is placed upside down on the dielectric layer 520.

Here, the carrier 420 is removed, so that the PVA layer 450 is disposed on the top.

The PVA layer 450 is removed by washing with water. Since PVA is water-soluble, the PVA layer 450 is readily removed from the photo-resist layer 480 by washing with water.

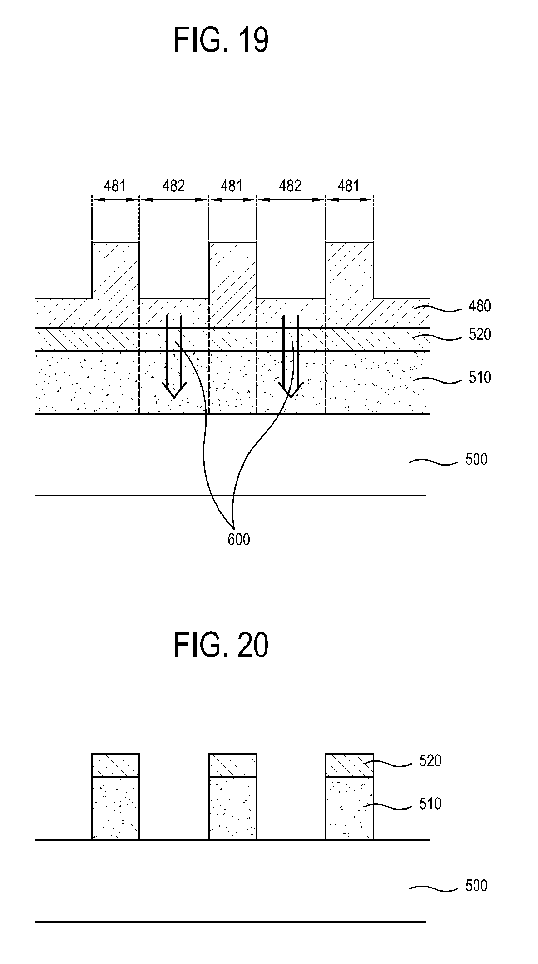

As shown in FIG. 19, etching 600 is carried out with the photo-resist layer 480 disposed on the top. Various etching methods may be used including dry etching using oxygen or argon gas.

The photo-resist layer 480 includes relatively thick portions 481 and thin portions 482, which are alternately disposed. Parts of the dielectric layer 520 and the metal layer 510 corresponding to the thin portions 482 are etched by etching 600. However, parts of the dielectric layer 520 corresponding to the thick portions 481 are not etched due to slow etching by the photo-resist layer 480.

As shown in FIG. 20, when etching is completed, the remaining photo-resist layer 480 is removed, thereby finishing the linear pattern of the metal layer 510 and the dielectric layer 520 on the glass 500.

According to the foregoing process, a seamless linear pattern without a nonuniform pitch may be manufactured in applying a linear pattern structure to a large screen.

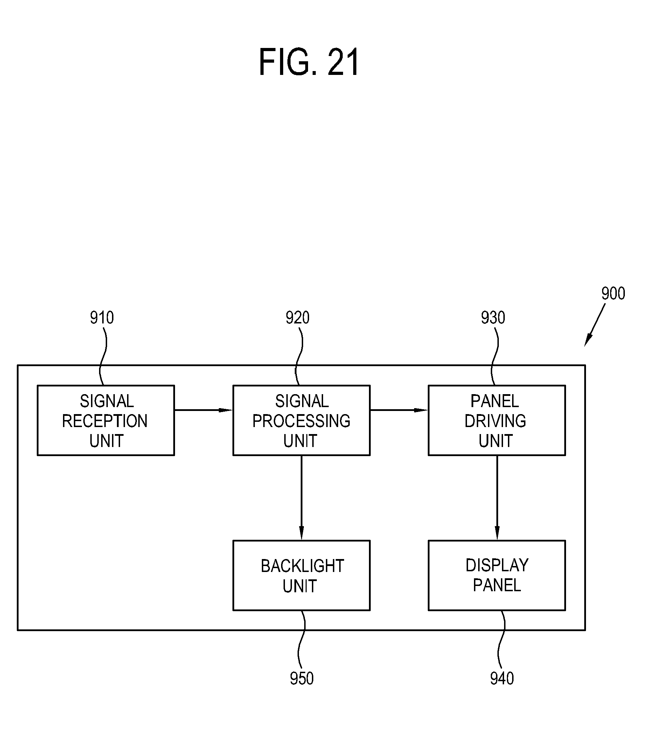

Hereinafter, a configuration of a display apparatus 900 according to an exemplary embodiment will be described with reference to FIG. 21.

FIG. 21 is a block diagram illustrating the configuration of the display apparatus 900 according to the present embodiment.

As shown in FIG. 21, the display apparatus 900 includes a signal reception unit 910 receiving an image signal, a signal processing unit 920 processing the image signal received by the signal reception unit 910 according to a preset image processing process, a panel driving unit 930 outputting a driving signal corresponding to the image signal processed by the signal processing unit 920, a display panel 940 displaying an image based on the image signal according to the driving signal from the panel driving unit 930, and a backlight unit 950 providing light to the display panel 940 corresponding to the image signal processed by the signal processing unit 920.

In the present embodiment, the display apparatus 900 may be configured as various devices capable of displaying images, for example, a TV, a monitor, a portable media player, and a mobile phone.

The signal reception unit 910 receives an image signal or image data and transmits the image signal or image data to the signal processing unit 920. The signal reception unit 910 may be configured as various types based on standards of received image signals and configurations of the display apparatus 900. For example, the signal reception unit 910 may receive a radio frequency (RF) signal transmitted from a broadcasting station (not shown) wirelessly or various image signals in accordance with composite video, component video, super video, SCART, high definition multimedia interface (HDMI), DisplayPort, unified display interface (UDI) or wireless HD standards via a cable. When the image signal is a broadcast signal, the signal reception unit 910 includes a tuner to tune the broadcast signal by each channel. Alternatively, the signal reception unit 910 may receive an image data packet from a server (not shown) through a network.

The signal processing unit 920 performs various image processing processes on the image signal received by the signal reception unit 910. The signal processing unit 920 outputs a processed image signal to the panel driving unit 930, thereby displaying an image based on the image signal on the display panel 940.

The signal processing unit 920 may perform any kind of image processing, without being limited to, for example, decoding corresponding to an image format of image data, de-interlacing to convert interlaced image data into a progressive form, scaling to adjust image data to a preset resolution, noise reduction to improve image quality, detail enhancement, frame refresh rate conversion, or the like.

The signal processing unit 920 may be configured as an integrated multifunctional component, such as a system on chip (SOC), or as an image processing board (not shown) formed by mounting separate components which independently conduct individual processes on a printed circuit board and be embedded in the display apparatus 900.

The panel driving unit 930, the display panel 940 and the backlight unit 950 have configurations substantially the same as those in the aforementioned embodiments, and thus detailed descriptions thereof are omitted herein.

Although a few exemplary embodiments have been shown and described, it will be appreciated by those skilled in the art that changes may be made in these exemplary embodiments without departing from the principles and spirit of the invention, the scope of which is defined in the appended claims and their equivalents.

## Claims

1. A display panel configured to receive light from a backlight unit, the display panel comprising:
an upper substrate;
a lower substrate disposed to face the upper substrate;
a liquid crystal layer disposed between the upper substrate and the lower substrate;
a lower polarizing layer formed on one surface of the lower substrate, the lower polarizing layer being configured to polarize and filter light received from the backlight unit;
an upper polarizing layer formed on one surface of the upper substrate, the upper polarizing layer being configured to polarize and filter light received from the lower polarizing layer and passing through the liquid crystal layer; and
a color filter layer formed on another surface of the lower substrate or on another surface of the upper substrate;
wherein the color filter layer comprises a plurality of color filters, each of the color filters transmitting corresponding light of a preset color; and
wherein each of the lower polarizing layer, the upper polarizing layer, and the color filter layer comprises a linear pattern.

2. The display panel of claim 1, wherein:
the linear pattern of the lower polarizing layer is configured to filter one part of the light received from the backlight unit and to transmit another part of the light received from the backlight unit, the transmitted light being polarized in a first polarizing direction, and
the linear pattern of the upper polarizing layer is configured to transmit a part of the light received from the lower polarizing layer and passing through the liquid crystal layer, the transmitted light being polarized in a second polarizing direction perpendicular to the first polarizing direction.

3. The display panel of claim 1, wherein:
an extending direction of the linear pattern of the lower polarizing layer is perpendicular to an extending direction of the linear pattern of the upper polarizing layer;
an extending direction of the linear pattern of the color filter layer is the same as the extending direction of the linear pattern of the lower polarizing layer if the color filter layer is formed on the lower substrate; and
an extending direction of the linear pattern of the color filter layer is the same as the extending direction of the linear pattern of the upper polarizing layer if the color filter layer is formed on the upper substrate.

4. The display panel of claim 1, further comprising:
a plurality of pixels, a pixel of the plurality of pixels comprising a plurality of sub-pixels;
wherein the plurality of sub-pixels comprises sections of the color filter layer;
wherein the sections of the color filter layer have preset colors; and
wherein for a sub-pixel of the plurality of sub-pixels, a pitch of the linear pattern of a corresponding section of the color filter layer is set such that the color filter transmits a wavelength range corresponding to a preset color of the sub-pixel.

5. The display panel of claim 4, wherein, the plurality of sub-pixels comprises: a first sub-pixel of the pixel comprises a red filter (R), a second sub-pixel of the pixel comprises a green filter (G), and a third sub-pixel of the pixel comprises a blue filter (B).

6. The display panel of claim 1, further comprising:
a plurality of pixels;
wherein each pixel comprises a section of the color filter layer, the section forming a color filter of the pixel;
wherein the color filters of adjacent pixels have linear patterns which are perpendicular on each other.

7. The display panel of claim 6 configured to form 3D images, wherein the plurality of pixels comprises:
a first set of pixels comprising color filters having a linear pattern in a first direction; and
a second set of pixels comprising color filters having a linear pattern in a second direction perpendicular on the first direction;
wherein the first set of pixels are configured to form images to be seen by a left eye of a user and the second set of pixels are configured to form images to be seen by a right eye of a user.

8. A display apparatus comprising:
a signal reception unit receiving an image signal;
a signal processing unit processing the image signal received by the signal reception unit according to a preset image processing process;
a display panel displaying an image based on the image signal processed by the signal processing unit; and
a backlight unit generating and providing light to the display panel so that the image is displayed on the display panel,
wherein the display panel comprises:
an upper substrate;
a lower substrate disposed to face the upper substrate;
a liquid crystal layer disposed between the upper substrate and the lower substrate;
a lower polarizing layer formed on one surface of the lower substrate and polarizing-filtering the light from the backlight unit;
an upper polarizing layer formed on one surface of the upper substrate and polarizing-filtering the light passing through the liquid crystal layer; and
a color filter layer formed on one surface of the lower substrate and the upper substrate and filtering light so that lights of a plurality of preset colors are emitted,
wherein each of the lower polarizing layer, the upper polarizing layer, and the color filter layer comprises a linear pattern.
